# EUROPÄISCHE PATENTSCHRIFT

(11) **EP 0 477 748 B1**
(45) Veröffentlichungstag und Bekanntmachung des Hinweises auf die Patenterteilung: **01.05.1996**
(21) Anmeldenummer: 91115813.7
(22) Anmeldetag: 18.09.1991
(51) Int. Cl.: C08L 23/06, C08K 5/34

(54) **Formmassen auf Basis Polyethylen mit einer mittleren Molmasse von mindestens 10 hoch 6 g/mol**
Very or ultra high molecular weight polyethylene moulding compositions
Masses à mouler à base de polyéthylène à poids moléculaire très élevé ou ultra élevé

(30) Priorität: 27.09.1990 DE 4030563
(43) Veröffentlichungstag der Anmeldung: 01.04.1992
(73) Patentinhaber: HOECHST AKTIENGESELLSCHAFT, D-65926 Frankfurt am Main (DE)
(72) Erfinder: Berzen, Josef, Dipl.-Phys., W-4200 Oberhausen 11 (DE)

(56) Entgegenhaltungen:
- EP-A- 0 440 054
- US-A- 3 708 457
- US-A- 4 467 061
- US-A- 4 826 898
- WORLD PATENTS INDEX LATEST Derwent Publications Ltd., London, GB; AN 84-246085

## Beschreibung

Die vorliegende Erfindung betrifft Formmassen aus Polyethylen mit einer mittleren Molmasse von mindestens 1 . 10⁶ g/mol, die gegen Witterungseinflüsse, insbesondere gegen den Abbau durch Wärme- und Lichteinwirkung, stabilisiert sind. Als Stabilisatoren enthalten die neuen Formmassen, sterisch gehinderte Amine und Kupferphthalocyanin.

Mit steigendem Polymerisationsgrad werden eine Reihe technisch wichtiger Eigenschaften des Polyethylens erheblich verbessert. So steigt die Kerbschlagzähigkeit an, Formbeständigkeit in der Wärme und Reißfestigkeit bei erhöhter Temperatur nehmen zu und der Widerstand gegen Spannungskorrosion wird vergrößert. Hervorzuheben sind ferner der hohe Verschleißwiderstand, der niedrige Reibungskoeffizient gegenüber anderen Werkstoffen, das ausgezeichnete Zähigkeitsverhalten und die bemerkenswerte Beständigkeit gegenüber zahlreichen Chemikalien. Besonders ausgeprägt sind die genannten technischen Eigenschaften bei ultrahochmolekularem Polyethylen, PE-UHMW, das eine mittlere Molmasse von mindestens 2,5 . 10⁶ g/mol bis zu etwa 1 . 10⁷ g/mol besitzt.

Wie alle Polymere wird hochmolekulares Polyethylen durch Wärme und Licht und damit im Zusammenhang stehende Oxidationseinflüsse chemisch verändert mit der Folge, daß seine mechanischen Eigenschaften merklich beeinträchtigt werden. Polyethylen einschließlich der hochmolekularen Typen muß daher gegen die Einwirkung von Wärme und Sauerstoff geschützt werden. Sollen die Polyolefine im Freien verwendet werden, ist auch ein Schutz gegen Sonnenlicht erforderlich, dessen UV-Anteile unter Beteiligung des Luftsauerstoffs den Kunststoff schädigen. Daher stabilisiert man die Polyolefine durch Zusatz von Antioxydantien und gegebenenfalls weiteren Additiven, die die Photooxidation unterdrücken.

Im Laufe der Zeit sind eine Vielzahl Additive entwickelt worden, die das Polymerisat bei Lagerung gegen Oxidation, bei der Verarbeitung gegen Oxidation und Wärme und bei der Verwendung über lange Zeiträume gegen die durch Licht und erhöhte Temperatur ausgelöste Oberflächenoxidation schützen. Zur Lichtstabilisierung von Polyolefinen bei Außenverwendung haben sich insbesondere Vertreter der folgenden Substanzgruppen bewährt: sterisch gehinderte ein-, zwei- oder dreiwertige Phenole, sterisch gehinderte Bisphenole und Trisphenole; sterisch gehinderte, vorwiegend aromatische, sekundäre Amine; Mercaptane, Thioether und Disulfide; Derivate der phosphorigen Säure und der Dithiophosphorsäure; Ruß; speziell zum Schutz gegen UV-Strahlung werden angewandt: o-Hydroxybenzophenone; 2-(o-Hydroxyphenyl)-benzotriazole; Phenylsalicylate; Zimtsäurederivate.

Außer Einzelsubstanzen haben auch Kombinationen aus zwei oder mehr Verbindungen einen deutlich lichtstabilisierenden Einfluß. Als Beispiel sei die Verwendung eines Gemisches aus 2,6-Di-(tert.-butyl)-4-methylphenol und Glycerinmonostearat als Lichtschutzmittel genannt.

Durch Zusatz von Lichtschutzmitteln wird die Lebensdauer von Polyolefinen nicht unbeschränkt verlängert; im allgemeinen wird sie gegenüber unstabilisiertem Material auf das dreifache erhöht, ein Zeitraum, der wirtschaftlichen und technischen Anforderungen nicht immer genügt. Man ist daher bestrebt, neue, wirksamere Stabilisatoren zu entwickeln oder die Wirksamkeit bekannter Stabilisatoren durch Kombination mit anderen Substanzen, die selbst keine Licht- oder UV-Stabilisatoren zu sein brauchen, zu verstärken.

Insbesondere in Verbindung mit hochmolekularem Polyethylen wird darüber hinaus angestrebt, Zusätze zu verwenden, die bereits in Mengen wirksam sind, die nicht zu einer Beeinträchtigung der Materialeigenschaften des Polymerisats führen.

Aus US 4,467,061 sind Formmassen bekannt, die mindestens ein Polyolefin und als Additive eine Benzotriazolverbindung, ein gehindertes Amin und eine Phenylbenzoatverbindung enthalten. Die veröffentlichte japanische Patentanmeldung 59 147036 betrifft vernetzte Polyolefinformmassen, die als Kabelummantelungen Verwendung finden. Den Polyolefinen werden Kupferphthalocyanin und ein Metalldesaktivator, z.B. Triazolderivate, Isophthalsäure- oder Oxalsäurehydrazide oder Oxamide zugesetzt. In der EP 0 440 054 A2 schließlich werden Phthalocyaninverbindungen enthaltende Formkörper aus schmelzfähigen Polyolefinen beschrieben, denen man zur Verbesserung der Farbstabilität ein sterisch gehindertes Amin und ein Phosphonat zusetzt. Alle Druckschriften beziehen sich, wie die Herstellung der Formmassen oder ihre Verwendung zeigt, auf niedermolekulare Polyolefine, die Schmelzen bilden, in denen die Additive ohne Schwierigkeit homogen verteilt werden können. Merkbare Veränderungen ihres mechanischen Verhaltens sind nicht zu erwarten, denn die niedermolekularen Polyolefintypen weisen keine ungewöhnlichen physikalischen Eigenschaften auf.

Es bestand daher die Aufgabe, Massen aus hochmolekularem Polyethylen zu entwickeln, die die ausgezeichneten physikalischen und chemischen Eigenschaften des Basismaterials aufweisen und gleichzeitig gegen Witterungseinflüsse weitgehend und über lange Zeiträume unempfindlich sind.

Diese Aufgabe wird gelöst durch Formmassen aus Polyethylen mit einer viskosimetrisch gemessenen mittleren Molmasse von mindestens 1 . 10⁶ g/mol, die , jeweils bezogen auf die Formmasse, 0,05 bis 0,5 Gew.-% eines sterisch gehinderten Amins und 0,1 bis 0,5 Gew.-% Kupferphthalocyanin und gegebenenfalls weitere übliche Zusatzstoffe enthalten.

Überraschenderweise wird die lichtstabilisierende Wirkung sterisch gehinderter Amine durch Kupferphthalocyanin deutlich verbessert. Besonders bemerkenswert ist, daß die Kupferverbindung allein keinen Einfluß auf das Verhalten von Polyethylen gegenüber sichtbarem Licht oder UV-Strahlung hat. Hervorzuheben ist weiterhin, daß die physikalischen Eigenschaften des Polyethylens durch die Zusatzstoffe nicht beeinträchtigt werden.

Die Herstellung von Polyethylen mit einer viskosimetrisch gemessenen mittleren Molmasse von mindestens 1 . 10⁶ g/mol bis zu 1 . 10⁷ g/mol ist bekannt. Sie kann nach verschiedenen Prozessen erfolgen. Ein bewährtes Verfahren, das unter niedrigem Druck mit Mischkatalysatoren aus Titan(III)-halogeniden und aluminumorganischen Verbindungen arbeitet, ist in der DE-AS 23 61 508 beschrieben. Andere Prozesse, die ebenfalls bei niedrigen Drücken arbeiten, verwenden z.B. Chromoxid-Katalysatoren.

Unter den vorstehend quantifizierten Molmassen werden die viskosimetrisch gemessenen Werte verstanden. Ein Verfahren zu ihrer Messung ist z.B. in CZ-Chemietechnik 4 (1974), S. 129 ff beschrieben.

Als Zusatzstoffe enthalten die erfindungsgemäßen Formmassen sterisch gehinderte Amine und Kupferphthalocyanin.

Unter dem Begriff sterisch gehinderte Amine werden Verbindungen verstanden, an deren dreibindiges Stickstoffatom ein oder mehrere raumfüllende organische Reste gebunden sind. Vorwiegend handelt es sich um aromatische und sekundäre Amine. Als Beispiele seien genannt N,N'-disubstituierte p-Phenylendiamine wie N,N'-Diisopropyl-p-phenylendiamin, N,N'-Di-sek.-butyl-p-phenylendiamin, Diphenylamin-Derivate wie N-Phenyl-l-naphthylamin und Aminophenolderivate wie 4-Dodecanoylaminophenol. Besonders bewährt hat sich Bis(2,2,6,6-tetramethyl-4-piperidyl)sebazat. Die sterisch gehinderten Amine werden in einer Konzentration von 0,05 bis 0,5 Gew.-%, insbesondere von 0,1 bis 0,3 Gew.-%, bezogen auf das Gesamtgewicht der Formmasse, angewandt.

Kupferphthalocyanin, das als organisches Pigment eingesetzt wird, erhält man technisch aus Phthalsäuredinitril und Kupfer(I)-chlorid. Es wird den erfindungsgemäßen Formmassen in der handelsüblichen Form zugesetzt. Unter Berücksichtigung der angestrebten Materialeigenschaften, der Herstellung und der Verarbeitbarkeit der neuen Formmassen empfiehlt es sich, die Konzentration der Kupferverbindung auf Werte von 0,1 bis 0,5 Gew.-%, bevorzugt von 0,2 bis 0,35 Gew.-%, jeweils bezogen auf das Gesamtgewicht der Formmasse, einzustellen.

Außer Aminen und Kupferphthalocyanin können die erfindungsgemäßen Formmassen noch weitere übliche Additive wie Gleitmittel und Verarbeitungsstabilisatoren enthalten.

Die Herstellung der stabilisierten Formmassen erfolgt durch homogene Mischung der Ausgangsmaterialien in einem Mischer und, abhängig von der Molmasse, durch Schmelzen bei Temperaturen von 125 bis 145°C oder durch Sintern bei Temperaturen von 180 bis 250°C, insbesondere 200 bis 230°C. Der Druck während des Sinterns beträgt 3 bis 5 Mpa, insbesondere 3 bis 4 MPa. Auch das Abkühlen nach dem Sintern wird unter Druck vorgenommen, bewährt haben sich 5 bis 10 MPa, vorzugsweise 8 bis 10 MPa. Sinter- und Kühlzeit hängen weitgehend von der Materialstärke ab.

Die neuen Formmassen lassen sich in üblicher Weise mechanisch bearbeiten, z.B. bohren, fräsen und sägen; sie können durch Pressen geformt werden.

Die Erfindung wird in dem folgenden Beispiel näher erläutert, jedoch nicht auf diese Ausführungsform beschränkt.

### Beispiel

Das Verhalten von stabilisiertem und nicht stabilisiertem Polyethylen unter den in Mitteleuropa herrschenden Witterungsverhältnissen wurde unter natürlichen Bedingungen im Freien an Probekörpern untersucht, die auf einem Prüfstand unter einem Winkel von 45° in südwestlicher Richtung gelagert waren. Die Probeentnahme erfolgte in festen Zeitintervallen über einen Zeitraum von 5 Jahren.

Als Probekörper dienten aus Preßplatten durch Warmschälen erhaltene quadratische Platten von 150 mm Seitenfläche und 1,5 mm Stärke (Testplatten). Die Herstellung der Preßplatten erfolgte aus pulverförmigem Polyethylen mit einer viskosimetrisch gemessenen Molmasse von 500.000 g/mol, das allein (Probe 1) oder nach Zumischung von 0,15 Gew.-% (bezogen auf die Mischung) Bis(2,2,6,6-tetramethyl-4-piperidyl)sebazat (Probe 2) bzw. 0,15 Gew.-% des Sebazats und 0,3 Gew.-% Kupferphthalocyanin (jeweils bezogen auf die Mischung - Probe 3) zu Platten mit den Maßen 800 mm x 400 mm x 30 mm gepreßt und zunächst 2 h bei 180°C unter einem Druck von 3 MPa gesintert und darauf 1,5 h unter einem Druck von 8 MPa abgekühlt wurde.

An den freigelagerten Proben wurden die mechanischen Eigenschaften Dichte, Reißfestigkeit und Reißdehnung aus dem Spannungs-Dehnungs-Diagramm bei 23 und 120°C sowie Verschleiß und Kerbschlagzähigkeit bestimmt. Die Prüfung der Dichte und der Festigkeitseigenschaften erfolgte an ausgestanzten Probekörpern der 1,5 mm starken Platten, während die Kerbschlagzähigkeits- und Verschleißproben spanend den 20 mm Platten von der bewitterten Seite in 10 bzw. 6,25 mm Probestärke entnommen wurden.

Zur Beurteilung der Veränderung des Eigenschaftsbildes unter natürlichen klimatischen Bedingungen wurde das Spannungs- und Dehnungsverhalten der Testplatten bei 23° ausgewählt und bestimmt, in welcher Zeit die Ursprungswerte auf 50 % zurückgegangen waren.

Bei Probe 1 hatte die Reißdehnung bereits nach 3 Monaten Außenbewitterung den Wert 0 erreicht, das Material war versprödet. Durch Zusatz eines Lichtschutzmittels (Probe 2) wurde das Festigkeitsverhalten unter den klimatischen Bedingungen Mitteleuropas verbessert, die Reißdehnung ging nach 9 Monaten auf die Hälfte des ursprünglichen Wertes zurück. Lichtschutzmittel in Kombination mit Kupferphthalocyanin (Probe 3) erhöht die Beständigkeit von hochmolekularem Polyethylen gegen Witterungseinflüsse deutlich. Erst nach 3,5 Jahren fiel die Reißdehnung auf 50 % ihres ursprünglichen Wertes ab.

## Patentansprüche

1. Formmassen aus Polyethylen mit einer viskosimetrisch gemessenen mittleren Molmasse von mindestens 1 . 10⁶ g/mol, dadurch gekennzeichnet, daß sie, jeweils bezogen auf die Formmasse, 0,05 bis 0,5 Gew.-% eines sterisch gehinderten Amins und 0,1 bis 0,5 Gew.-% Kupferphthalocyanin und gegebenenfalls weitere übliche Zusatzstoffe enthalten.

2. Formmassen nach Anspruch 1, dadurch gekennzeichnet, daß die Konzentration des sterisch gehinderten Amins 0,1 bis 0,3 Gew.-%, bezogen auf die Formmasse, beträgt.

3. Formmassen nach Anspruch 1 oder 2, dadurch gekennzeichnet, daß sie als sterisch gehindertes Amin eine Verbindung aus der Gruppe der N,N'-disubstituierten p-Phenylendiamine, der Diphenylamin-Derivate wie N-Phenyl-l-naphthylamin, der Aminophenolderivate wie 4-Dodecanoylaminophenol und insbesondere Bis(2,2,6,6-tetramethyl-4-piperidyl)sebazat enthalten.

4. Formmassen nach einem oder mehreren der Ansprüche 1 bis 3, dadurch gekennzeichnet, daß sie Kupferphthalocyanin in einer Konzentration von 0,2 bis 0,35 Gew.-% enthalten.

5. Verfahren zur Herstellung der Formmassen nach einem oder mehreren der Ansprüche 1 bis 4, dadurch gekennzeichnet, daß man pulverförmiges Polyethylen und Zusatzstoffe mischt und je nach Molmasse, entweder bei Temperaturen von 125 bis 145°C schmilzt oder bei Temperaturen von 180 bis 250°C, insbesondere 200 bis 230°C, unter einem Druck von 3 bis 5 MPa, vorzugsweise 3 bis 4 MPa, sintert und nach dem Sintern unter einem Druck von 5 bis 10 MPa, vorzugsweise 8 bis 10 MPa, abkühlt.

## Claims

1. A molding composition of polyethylene having an average molecular weight, measured by viscometry, of at least 1 x 10⁶ g/mol, which contains, in each case based on the molding composition, 0.05 to 0.5 % by weight of a sterically hindered amine and 0.1 to 0.5 % by weight of copper phthalocyanine, and if appropriate other customary additives.

2. A molding composition as claimed in claim 1, wherein the concentration of the sterically hindered amine is 0.1 to 0.3 % by weight, based on the molding composition.

3. A molding composition as claimed in claim 1 or 2, which contains, as the sterically hindered amine, a compound from the group comprising N,N'-disubstituted p-phenylenediamines, diphenylamine derivatives such as N-phenyl-1-naphthylamine, aminophenol derivatives such as 4-dodecanoyl-aminophenyl and in particular bis(2,2,6,6-tetramethyl-4-piperidyl) sebacate.

4. A molding composition as claimed in one or more of claims 1 to 3, which contains copper phthalocyanine in a concentration of 0.2 to 0.35 % by weight.

5. A process for the preparation of a molding composition as claimed in one or more of claims 1 to 4, which comprises mixing pulverulent polyethylene and additives and, depending on the molecular weight, either melting the mixture at temperatures of 125 to 145°C or sintering the mixture at temperatures of 180 to 250°C, in particular 200 to 230°C, under a pressure of 3 to 5 MPa, preferably 3 to 4 MPa, and after sintering cooling the mixture under a pressure of 5 to 10 MPa, preferably 8 to 10 MPa.

## Revendications

1. Matières à mouler constituées de polyéthylène présentant une masse molaire moyenne mesurée par la viscosité d'au moins 1.10⁶ g/mol, caractérisées en ce qu'elles contiennent 0,05 à 0,5% en poids d'une amine stériquement encombrée et 0,1 à 0,5% en poids de phtalocyanine de cuivre, rapportés à chaque fois à la matière à mouler, et éventuellement d'autres additifs classiques.

2. Matières à mouler selon la revendication 1, caractérisées en ce que la concentration de l'amine stériquement encombrée est de 0,1 à 0,3% en poids, rapportés à la matière à mouler.

3. Matières à mouler selon la revendication 1 ou 2, caractérisées en ce qu'elles contiennent en tant qu'amine stériquement encombrée un composé provenant du groupe des p-phénylènediamines N,N'-disubstituées, des dérivés de la diphénylamine comme la N-phényl-1-naphtylamine, des dérivés de l'aminophénol comme le 4-dodécanoylaminophénol et en particulier le sébacate de bis(2,2,6,6-tétraméthyl-4-pipéridyle).

4. Matières à mouler selon l'une ou plusieurs quelconques des revendications 1 à 3, caractérisées en ce qu'elles contiennent de la phtalocyanine de cuivre dans une concentration de 0,2 à 0,35% en poids.

5. Procédé pour la préparation des matières à mouler selon l'une ou plusieurs quelconques des revendications 1 à 4, caractérisé en ce qu'on mélange du polyéthylène sous forme de poudre et des additifs et que selon la masse molaire soit on les fait fondre à des températures de 125 à 145°C, soit qu'on les agglomère par frittage à des températures de 180 à 250°C, en particulier de 200 à 230°C, sous une pression de 3 à 5 MPa, de préférence de 3 à 4 MPa, et qu'on les refroidit après le frittage sous une pression de 5 à 10 MPa, de préférence de 8 à 10 MPa.
